# EUROPEAN PATENT SPECIFICATION

(11) **EP 1 965 006 B1**
(45) Date of publication and mention of the grant of the patent: **17.08.2011**
(21) Application number: 07425118.2
(22) Date of filing: 01.03.2007
(51) Int. Cl.: E05B 13/10, F16K 35/06, E05B 29/00

(54) **Lock to control a valve**
Sperre zur Ventilregelung
Verrou pour contrôler une vanne

(43) Date of publication of application: 03.09.2008
(73) Proprietor: SERRATURE MERONI S.p.A., 20054 Nova Milanese (Milano) (IT)
(72) Inventor: Fretta, Luigi, 20033 Desio (Milano) (IT)
(74) Representative: Siniscalco, Fabio

(56) References cited:
- EP-A- 0 355 457
- EP-A1- 1 065 421
- US-A- 2 580 882
- US-A- 5 182 929

## Description

The present invention relates to a lock, in particular a lock of a type which can be employed to control a valve.

Locks which are applicable to a valve are known (for example a gas or water valve), the valve serving to the interception of gas or water passage, which is located downstream a counter.

Such a valve generally comprises a valve body in which a shutter is received which is fixedly connected to a stem extending outwardly the valve body. As it is known, such a stem is rotatable through a butterfly actuator or a lever to rotate the shutter, i.e. to allow or prevent gas (or water) inflow to the consumers. The actuator angle of rotation between the two abovementioned closing and opening positions is commonly of 90°.

In these valves, the lock is generally coupled both to the valve body stem and the actuator. One function of the lock provides that the user can lock the valve in the closed position with his/her own key with the aim to prevent the actuator rotation by anyone else and, therefore, to prevent the valve opening.

A drawback associated to the use of the aforementioned valve locks is that, in the case of a valve body replacement, i.e. of the shutter and the projecting stem, the replacement of the corresponding lock is often necessary, too. In fact, the new stem is usually of shape and size such that it cannot be coupled with the lock in use anymore. In this way, a valve body replacement, for example, due to wear of the shutter gears, is really economically wasteful.

Document EP 0 355 457 A D1 discloses a valve structure with key-operated lock, comprising a valve body defining an inlet port and an outlet port. A spherical shutter is interposed between such ports and is actuated by a stem rotatably supported by said body. The valve structure comprises a lock cylinder, associable with said stem and rotatably supported in a seat defined by an actuation element rotatably supported by said body.

The object of the present invention is to provide a lock for a valve which allows overcoming the drawbacks of traditional locks with special reference to the costs related to the valve replacement.

This object is achieved by a lock as defined by the annexed claim 1. Preferred embodiments of the invention are defined by the dependant claims.

The features and advantages of the present invention will be understood by the following detailed description of one exemplary, and in no way limiting, embodiment thereof as regards the annexed drawings, in which:
- Fig. 1 shows an exploded perspective view of the lock according to the invention;
- Figs. 2A and 2B show front and rear perspective views of a drum portion of the lock of figure 1;
- Fig. 3 shows a perspective view of a valve body, a valve actuator and the lock of figure 1;
- Fig. 4 shows a perspective view of a further embodiment of the drum portion of Fig. 2A and 2B and of a stop tab which can be employed in the lock of the invention;
- Figs. 5A and 5B show perspective views of a further drum portion of Fig. 1 coupled to a lock rotor wherein a respective stop tab is in a first and in a second working positions, respectively;
- Fig. 6 shows a perspective view of a further embodiment of the drum portion of the lock of Fig. 2B.

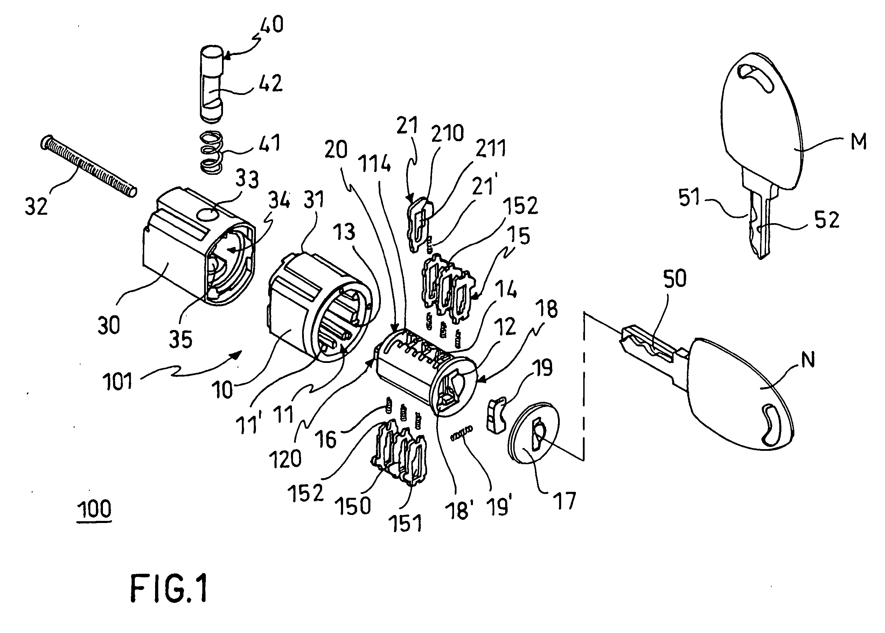

With reference to Figs. 1, 2A, 2B, 3, 5A, and 5B, a preferred embodiment of a lock 100 in accordance with the present invention will be now described. Same or like members and components are indicated in the figures by the same reference numbers.

It should be noted that the aforementioned lock 100 is applicable, in particular, to a valve, but the same lock 100 can be used also in different fields, as it will be clear herein below.

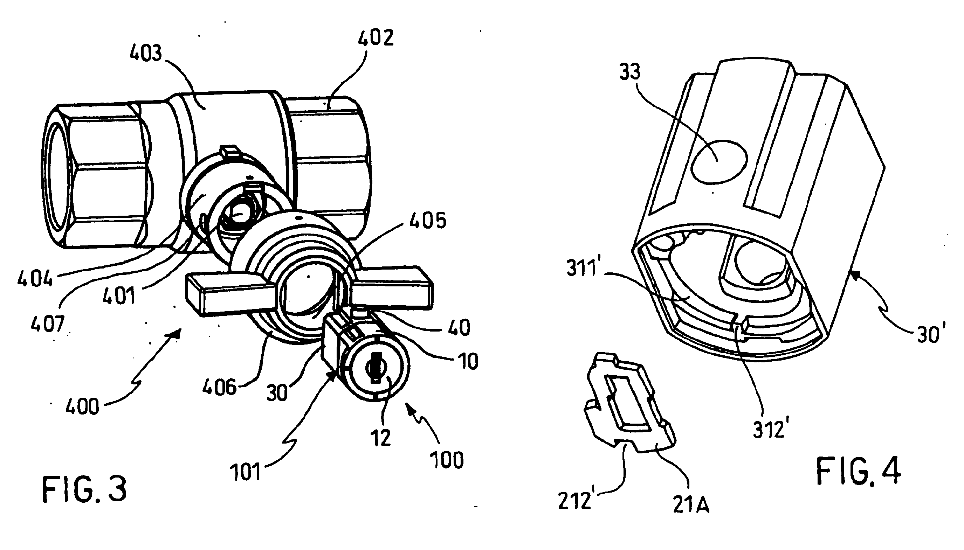

The lock 100 comprises a drum 101 adapted to house the lock gears and to be fixed to a stem 401 of a valve 400 shown in Fig. 3. Is should be noted, in particular, that the drum 101 is adapted to be rotationally fastened to the aforementioned stem 401.

Such a drum 101 comprises a first portion or first body 10 of a substantially cylindrical shape, provided with an axial bore 11 in which a cylindrical rotor 12 is rotatingly received. In greater detail, the rotor 12 is insertable in the bore 11 through a circular opening 11'. A cylindrical inner surface of the first body 10 comprises a plurality of longitudinal ribs 13 projecting from such a surface to the bore 11.

Furthermore, the drum 101 comprises a substantially box-shaped second portion or case 30 reversibly fixable to the first body 10. In particular, such a case 30 is fixable to an end 31 of the first body 10 opposed to the circular opening 11'.

In other terms, the drum 101 of the inventive lock 100 is not a single piece, but includes two portions, the first body 10 and the case 30, distinct and individual.

It should be noted that the fixing of the case 30 to the first body 10 can be carried out, for example, through screws, nails, rivets, and other equivalent fixing means. In the example of Fig. 1, the fixing is carried out through a screw 32.

Furthermore, the first body 10 and the case 30 can be made in metal or plastic and, preferably, are made in ZAMAK alloy, i.e. a zinc-based alloy containing variable percents of aluminium, magnesium, and copper. For example, in order to manufacture the first body 10 and the case 30, the ZAMAK 15 (ZA4C1) alloy is used, in which percents of aluminium, copper, and magnesium are within the following ranges: aluminium, 3.9%-4.3%, copper, 1%-1.25%, magnesium, 0.03%-0.04%.

In addition, the case 30 is equipped with a radial hole 33 of the passing-through type, debouching in a further respective axial bore 34. On an inner surface of such a bore 34, a housing 35 opens which is aligned and opposite to the radial hole 33.

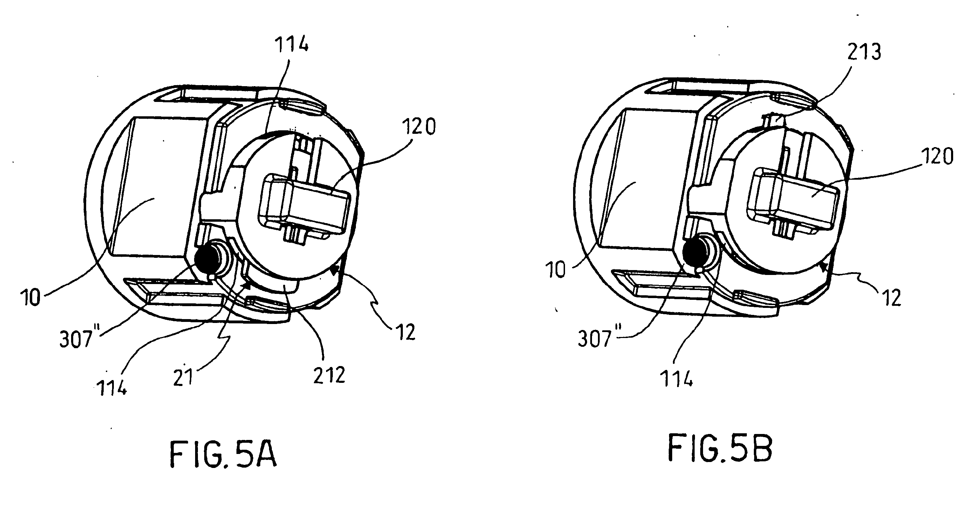

A metal bolt 40 of the lock 100 (made of, for example, brass) of a substantially cylindrical shape is housed in the case 30, thus being substantially orthogonal to the longitudinal axis of the same case. In particular, upon the bolt 40 a helical spring 41 radially acts which reacts on a bottom wall of the housing 35. Furthermore, the bolt 40 is provided with a notch 42 on which a key portion 120 of the rotor 12 acts. Such a key portion 120 is shown, in particular, in Figs. 5A and 5B. The spring 41 resiliently keeps the bolt 40 in a position which is extracted from the case 30 through the radial hole 33, i.e. in a closure position. Instead, the action of the key portion 120 on the notch 42 is such to retract the bolt 40 in the case 30, opposing the spring 41.

It should be noted that the cylindrical rotor 12 comprises a plurality of opposite radial slots 14 of the passing-through type, adapted to house a plurality of tabs 15. In particular, each tab 15 housed in the respective slot 14 is adapted to elastically project outwardly of the rotor 12 in a direction orthogonal to the longitudinal axis of the latter, under the action of a respective first spring 16.

Each tab 15 of the rotor 12 has a flat body 150 provided with a shaped through hole 151. These through holes 151 of the tabs 15 are a ciphering code of the lock 100, and each tab 15 is adapted to interact with the teeth of a common key N of the lock 100 to allow for the rotor 12 rotation within the first body 10.

Furthermore, the tabs 15 comprise recesses 152 carried out at ends opposite of the flat body 150 adapted to engage respective projecting longitudinal ribs 13 provided within the first body 10 when the tabs 15 are resiliently extracted from the rotor 12.

It should be noted that the common key N of the lock 100 is insertable in the rotor 12 through a keyhole 17 that is fixed to a first end 18 of the same rotor 12.

Furthermore, a further radial slot 114 of the passing-through type proximate to a second end 20 of the rotor 12 is adapted to accommodate a stop tab 21 equipped with spring 21'. In particular, such a stop tab 21 comprises a further flat body 210 including a further ciphering shaped hole 211. Furthermore, with reference to Figs. 5A and 5B, such a stop tab 21 comprises a stop member 212 and a tooth 213 located at opposite ends of the further flat body 210.

The aforementioned stop tab 21 can be actuated by a master key M inserted in the keyhole 17 in order to translate in such a further slot 114 in the direction orthogonal to the longitudinal axis of the rotor 12.

It should be further noted that the lock 100 comprises a dust cover member 19 housed in a first bore 18' of said first end 18 of the rotor 12 which can be closed back through the keyhole 17. Such a dust cover member 19 resiliently moves in the first bore 18', pressing a respective spring 19' in response to the insertion of the common key N or the master key M in the keyhole 17 of the rotor 12. Thereby, the dust cover member 19 closes back the keyhole 17 in the absence of a key whatsoever.

The lock 100 of the invention can be actuated both by the common key N and the master key M. In particular, the common key N has a toothing 50 different from toothing 51 of the master key M. Furthermore, at the end of the master key M, on the side opposite the toothing 51, an indenture 52 is obtained.

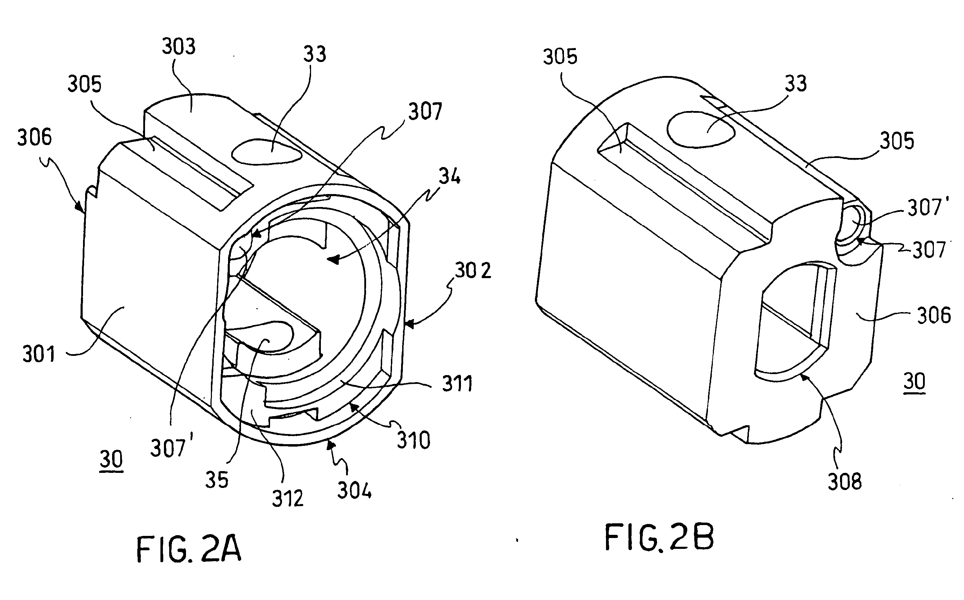

Figs. 2A and 2B show front and rear perspective views, respectively, of the case 30 being a part of the drum 101 of the lock 100 of the invention.

In particular, case 30 comprises a first 301 and a second 302 planar side walls mutually opposed, and a first 303 and a second 304 substantially convex walls mutually opposed and joined to the planar walls 301 and 302. Furthermore, these planar walls 301 and 302, and the convex walls 303 and 304 are joined to a bottom wall 306 of the case 30 so as to define the further bore 34.

It should be noted that the curvilinear profile of the convex walls 303 and 304 of the case 30 is interrupted by longitudinal grooves 305.

Furthermore, with reference to Figs. 1, 2A, 2B, 5A, and 5B, the lock 100 comprises a substantially cylindrical duct 307 in order to house the screw 32 for the fixing of the case 30 to the first body 10. Such a duct 307 comprises a first duct length 307' included in the case 30, and a second length 307" included in the first body 10.

In particular, the first duct length 307' is parallel to the longitudinal axis of the case 30 and is located in the proximity of the junction corner between the first planar wall 301 and the first convex wall 303.

Furthermore, with reference to Fig. 2A, the case 30 comprises a respective first end 310 opposite to the bottom wall 306 adapted to abut against the end 31 of the first body 10. In more detail, such a first end 310 includes a further housing 311 being in the shape of an arc of circle and comprising an abutment plane and a detent relief 312.

It is to be noted that by extracting the master key M from the lock 100, the stop tab 21 of the rotor 12 abuts against the abutment plane of the further housing 311. In such a case, the detent relief 312 is adapted to laterally engage the stop member 212 of the stop tab 21, thus locking it. Consequently, the lock 100 keeps being in a locking position wherein any further rotation of the rotor 12 through the common key N is prevented.

With reference to Fig. 2B, the bottom wall 306 of the case 30 comprises engaging means 308 adapted to couple to the stem 401 of the valve 400 shown in Fig. 3. In particular, these engaging means are implemented by a through opening 308 in order to allow the case 30 to be fitted on the stem 401.

It should be noted that such a through opening 308 is designable in order to be of variable shape, dimensions and orientation, so as to allow for the coupling of the case 30 to valve stems 401 having a plurality of different shapes and dimensions.

The valve 400 of Fig. 3 can be employed, for example, to allow or prevent the passage of fluids (gas or water) in a tubing 402. In particular, such a valve 400 comprises a valve body 403 of a known type, including a shutter (not shown in Fig. 3) that is fixedly connected to the stem 401. Such a stem 401 projects outwardly of the valve body 403, thus being coaxial to a valve sleeve or cylindrical bush 404. Furthermore, the stem 401 is rotatable in order to rotate the shutter, i.e. to allow or prevent the passage of gas (or water) along the tubing 402.

As is known to those skilled in the art, the drum 101 of the lock 100 is adapted to be housed in a loosely rotating way in the bush 404 so as to be rotationally constrained to the stem 401. Furthermore, the drum 101 is insertable in a further through opening 405 of a valve 400 actuator 406, thus being integral to the latter. Such an actuator 406 is, for example, of the butterfly type, or it is a lever.

Thereby, the lock 100 of the invention is coupled both to the stem 401 of the valve body 403 and to the actuator 406.

As it is known, in a closure position of the lock 100, the bolt 40 engages with a further through hole 407 of the bush 404. Consequently, the drum 101 is rotatingly engaged to the bush 404, the actuator 406 cannot rotate, and the valve 400 opening is prevented. Vice versa, in the opening position of the lock 100, the bolt 40 is in disengagement position from the hole 407 and drum 101 can freely rotate in the bush 404. Thereby, the valve 400 can be opened by rotating the actuator 406.

A further embodiment of a case 30' of the lock 100 can be described with reference to Fig. 4.

Such a case 30' comprises a further detent relief or tooth 312' achieved in the housing 311'.

Furthermore, the lock 100 comprises a further stop tab 21A which is inserted in the rotor 12. In particular, such a further stop tab 21A includes a respective stop member 212' provided with a further recess.

It is to be noted that by extracting the master key M from the lock 100, such a further stop tab 21A is extracted from the rotor 12 and the recess of the further stop member 212' is adapted to engage the detent tooth 312', thus locking the lock 100.

In this case, any further rotation of the rotor 12 through the common key N is prevented.

Such a case 30' includes, for example, a respective bottom wall equipped with a through opening similar to the through opening 308 of the case 30 of Fig. 2B.

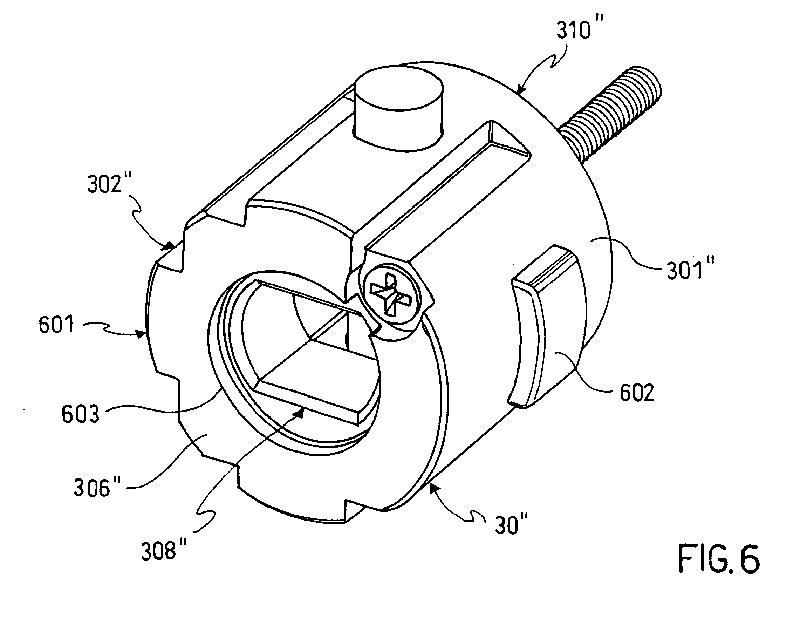

A still further embodiment of a case 30" of the lock 100 can be described with reference to Fig. 6.

In particular, such a case 30" comprises a further substantially convex first side wall 301" and a further substantially planar second side wall 302". Is should be noted that such a case 30" includes an orienting member 601 adapted to define a suitable assembly orientation of the lock 100 to the valve 400. Such an orienting member is implemented by a longitudinal projection 601 arranged on the further second side wall 302'' and adapted to engage with a respective groove which is achieved in the cylindrical bush 404 of the same valve 400. Furthermore, a further relief 602 adapted to engage a respective housing formed in the bush 404 is projecting from the further first side wall 301''.

A respective bottom wall 306" of the case 30" includes a further through opening 308", similar to the opening 308 shown in Fig. 2B, but rotated of about 90° relative to the latter. Is should be further noted that such a further through opening 308" is surrounded by a substantially circular prompt 603 adapted to promote the engagement of the lock 100 to the stem 401 of the valve 400.

It should be noted that a further first end 310" of the case 30" opposite to the bottom wall 306" is such as to include the detent relief 312 shown in Fig. 2A, or the detent tooth 312' described with reference to Fig. 4.

An operating example of the lock 100 of the invention with reference to Figs. 1, 2A, 2B, 3, 5A, and 5B will be now described.

As set forth above, the lock 100 of the invention is of the type which is disabled by the master key M. In other terms, such a master key M allows for the rotation of the rotor 12 from a first unlocking angular position of the bolt 40, wherein the rotor 12 is rotatable to open the bolt 40 through the common key N (beside with the master key M), to a second angular locking position of the bolt 40, wherein the rotor 12 cannot be rotated by the common key N, and the opening of the bolt 40 can only occur through the master key M.

Consequently, the lock 100 of the invention finds use whenever the deactivation of the same lock is required, thus allowing its functioning only through the master key M.

It should be noted that in the bolt 40 angular locking position, the stop tab 21 is extracted from the rotor 12 (for example as in Fig. 5A) and engages in abutment in the housing 311 against the case 30 detent relief 312. In this case, by inserting the common key N in the keyhole 17 of the rotor 12, only the ciphering tabs 15 are retracted inside the same rotor 12, while the stop tab 21 remains extracted, thus preventing any rotation by the latter.

Starting from such a locked condition, by inserting the master key M in the rotor 12, the tabs 15 are retracted in the same rotor, and the stop tab 21 is translated from a first working position (tab 21 extracted) of Fig. 5A to a second working position (tab 21 retracted) shown in Fig. 5B. In this case, the rotor 12 can be rotated by 180° by the master key M (for example clockwise), switching from the bolt 40 angular locking position to the unlocking one.

It should be noted that, once extracted the master key M from the rotor 12, even when the stop tab 21 goes back in the extracted position schematically shown in Fig. 5A, in this case the abutment member 212 of such a tab 21 does not engage anymore with the relief 312. In fact, the stop tab 21 radially projects on the opposite side of the housing 311. In this case, if the common key N is inserted in the rotor 12, a 90° rotation for the latter is possible (for example clockwise) in order to open the bolt 40. By rotating the rotor by 90° counter-clockwise, the bolt 40 is closed once again.

Of course, from the angular unlocking position of the bolt 40 the reversible reset of the locking position of the same is possible. In this case, the master key M is inserted in the rotor 12 to rotate the latter by 180° (for example counter-clockwise).

It should be noted that the same consideration apply where the lock 100 comprises the case 30' and the further stop tab 21A described with reference to Fig. 4, or the case 30" described with reference to Fig. 6.

By applying the lock 100 of the invention to the valve 400 described with reference to Fig. 3, a first function of such a lock 100 provides that a user locks in the closed position the valve 400 with his/her own common key N with the aim of preventing the actuator 406 rotation by anyone else, thereby preventing the valve opening.

A second function of the lock 100 provides that the gas (or water) supplier can lock the valve 400 in the closed position by his/her own master key M, thereby preventing the user from unlocking it through the common key N.

The valve 400 locking for the user is required for example in case of arrearage of the latter.

In case the replacement of a worn, old valve body 403 in a gas (or water) tubing 402 with a new valve body 403 having a new stem 401 having dimensions (or shape) different from the old one is desired, the lock 100 of the invention advantageously makes such an operation not very expensive from an economical point of view.

In fact, in the abovementioned event, the lock 100 is first disassembled from the old valve 400 disengaging the drum 101 from the stem 401.

Secondly, the first body 10 is separated from the case 30 (30', 30") by unscrewing the screw 32. Then, the aforementioned case 30 (30', 30'') is replaced with a new case 30 (30', 30") similar to the previous one, but having the respective opening 308 (308") of the bottom base 306 (306'') suitable dimensioned in order to be coupled to the new stem 401. In particular, the new case 30 (30', 30'') is secured to the first body 10 (through the screw 32) and, afterwards, the drum 101 including the new case is secured to the new stem 401 of the new valve 400.

Thereby, advantageously, in order to replace an old valve, the replacement also of the whole lock 100 is not required anymore. In fact, the first body 10 containing the rotor 12 and the complex and costly lock gears can be reused.

Furthermore, advantageously, with the lock 100 of the invention the manufacturing and assembling of the rotor 12 is significantly simplified.

In fact, using the ciphering tabs 15 and the stop tab 21 (21A), a limited number of parts to be assembled is used, as compared with the plurality of plugs and springs used in the piston locks of the traditional type.

Furthermore, the tabs 15, which are provided with recesses 152, ensure a high hold on the ribs 13 of the first body 10, thereby increasing the lock 100 safety against fraudulent attempts to open it with a key different from the common key N.

Furthermore, advantageously, shape and dimensions of the drum 101 of the lock 100 can be changed to fit further different openings 405 of the valve 400 actuator 406.

The lock 100 is characterized in that it comprises stop means 21, 21A received in the rotor 12 which are controllable through the master key M. These stop means are implemented by a stop tab 21, 21A equipped with spring 21' suitable to be retracted in the rotor 12 following to the insertion of the master key M in said rotor.

It should be noted that in the angular locking position of the bolt 40, such a stop tab 21, 21A is extracted from the rotor 12 and is abuttingly engaged on a housing 311, 311' which is achieved in the drum 101 against a detent relief 312, 312'. In this case, by inserting the common key N in the rotor 12, the tabs 15 are retracted in the same rotor, while such a stop tab 21, 21A remains extracted, thereby preventing any rotation of the rotor inside the drum 101.

Of course, to the lock according to the present invention, those skilled in the art, aiming at meeting contingent and specific needs, will be able to make further modifications and variations, all being however contemplated within the scope of protection of the invention, as defined by the following claims.

## Claims

1. A lock (100) to control a valve (400) comprising a stem (401) extending outwardly of a valve body (403) of the valve (400), said stem (401) being rotatable in order to control the valve (400) opening and closing,
said lock (100) comprising a drum (101) adapted to be rotationally constrained to the stem (401) and including a rotor (12) in order to actuate said lock between a closure position and an opening position,
said drum (101) comprising a first portion (10) and a second portion (30, 30', 30"), reversibly fixable one to the other, said first portion (10) of the drum being adapted to house the rotor (12) which has ciphering tabs (15), each ciphering tab (15) being adapted to interact with a common key (N) of the lock (100) to allow the rotor (12) rotation within the first portion (10), and said second portion (30, 30', 30") being adapted to be rotationally fastened to the stem (401) of the valve .(400) through engaging means (308, 308") which are included in a bottom wall (306, 306") of said second portion,
said second portion (30, 30', 30") of the drum (101) comprising a first end (310, 310') opposite to the bottom wall (306, 306") including locking relieves (312, 312') for the rotation of the rotor (12),
said rotor (12) including a radial slot (114) of the passing-through type adapted to house a stop tab (21, 21A), said stop tab can be actuated by a master key (M), in order to translate within such slot (114) in a direction orthogonal to the longitudinal axis of the rotor (12),
wherein the stop tab (21, 21A) further includes detention members (212, 212') in order to engage said locking relieves (312, 312') of the second portion (30, 30` , 30") in a locking position of the lock.

2. The lock (100) according to claim 1, wherein said engaging means comprise a through opening (308, 308").

3. The lock (100) according to claim 1, wherein said first portion (10) of the drum (101) is of a substantially cylindrical shape and comprises an axial bore (11) in order to rotatingly house the rotor (22).

4. The lock (100) according to claim 3, wherein said rotor (12) is insertable in the bore (11) through a circular opening (11') of the first portion (10).

5. The lock (100) according to claim 4, wherein said second portion (30, 30' , 30") of the drum (101) can be fixed to an end (31) of the first portion (10) opposite said circular opening (11').

6. The lock (100) according to claim 1, wherein said second portion (30, 30', 30") of the drum (101) comprises a radial hole (33) of the passing-through type debouching in a respective further axial bore (34).

7. The lock (100) according to claim 6, wherein said second portion (30, 30', 30") comprises a bolt (40) that is resiliently translatable in a direction substantially orthogonal to a longitudinal axis of the second portion in order to engage said radial hole (33).

8. The lock (100) according to claim 7, wherein said bolt (40) is associated with a helical spring (41) which reacts on a bottom wall achieved in said further bore (34).

9. The lock (100) according to claim 7, wherein said bolt (40) is provided with a notch (42) on which a key portion (120) of the rotor (12) acts.

10. The lock (100) according to claims 1 and 6, wherein said second portion (30, 30') of the drum (101) comprises first (301) and second (302) planar side walls mutually opposed and first (303) and second (304) convex walls mutually opposed and joined to the planar walls, said planar walls (301, 302) and said convex walls (303, 304) being joined to the bottom wall (306) so as to define said further bore (34), said radial hole (33) being achieved in said first convex wall.

11. The lock (100) according to claim 1, wherein the drum (101) further comprises a duct (307) to house fixing means (32) of said second portion (30, 30', 30") to the first portion (10), said duct being splittable in a first duct length (307') comprised in the second portion and a second length (307") comprised in the first portion.

12. The lock (100) according to claim 11, wherein said fixing means of said second portion (30, 30', 30") to the first portion (10) comprise screws, nails, and rivets.

13. The lock (100) according to claim 1, further including a multiplicity of ciphering tabs (15) housed in respective radial slots of the passing-through type (14) of said rotor (12), each tab being adapted to resiliently project outwardly of the rotor under the action of a respective first spring (16).

14. The lock (100) according to claim 13, wherein said tabs (15) include a shaped through hole (151) adapted to interact with the teeth of a lock common key (N) in order to be retracted inside the rotor (12).

15. The lock (100) according to claim 13 or 14, wherein said tabs (15) comprise recesses (152) to engage respective longitudinal ribs (13) formed within the first body (10).

16. The lock (100) according to claim 1, wherein said detention members (212') comprise a further recess to house a detention tooth (312').

17. The lock (100) according to any of the preceding claims, wherein the first (10) and second (30, 30', 30'') portions of the drum (101) are made using a zinc-based metal alloy including percents of aluminium, copper, and magnesium, said percents ranging within the following ranges: aluminium, 3.9%-4.3%, copper, 1%-1.25%, magnesium, 0.03%-0.04%.

18. The lock (100) according to claim 2, wherein said through opening (308, 308") is designed so as to be of variable shape, dimensions, and orientation, thereby allowing for the coupling of the lock to stems (401) of valves having a plurality of different shapes and dimensions.

19. The lock (100) according to claim 1, wherein said second portion (30") comprises an orienting member (601) in order to define an assembly orientation of the lock to the valve (400).

## Patentansprüche

1. Schloss (100) zum Steuern eines Ventils (400), enthaltend einen Schaft (401), der sich außerhalb eines Ventilkörpers (403) des Ventils (400) erstreckt, wobei der Schaft (401) drehbar ist, um das Ventil (400) öffnend und schließend zu steuern,
wobei das Schloss (100) einen Zylinder (101) enthält, der dazu eingerichtet ist, drehbar mit dem Schaft (401) gekoppelt zu werden und einen Rotor (12) enthält, um das Schloss zwischen einer Schließstellung und einer Öffnungsstellung zu betätigen,
der Zylinder (101) einen ersten Abschnitt (10) und einen zweiten Abschnitt (30, 30', 30") enthält, die reversibel aneinander fixiert werden können, wobei der erste Abschnitt (10) des Zylinders dazu eingerichtet ist, den Rotor (12) aufzunehmen, der Codeplättchen (15) hat, wobei jedes Codeplättchen (15) dazu eingerichtet ist mit einem herkömmlichen Schlüssel (N) des Schlosses (100) zusammenzuwirken, um es dem Rotor (12) zu gestatten, sich innerhalb des ersten Abschnittes (10) zu drehen, und der zweite Abschnitt (30, 30', 30") dazu eingerichtet ist, in Drehrichtung an dem Schaft (401) des Ventils (400) durch Eingreifeinrichtungen (308, 308') befestigt zu sein, die in einer Bodenwand (306, 306') des zweiten Abschnittes enthalten sind,
der zweite Abschnitt (30, 30', 30") des Zylinders (101) ein erstes Ende (310, 310') enthält, das der Bodenwand (306, 306') gegenüberliegt und Verriegelungsreliefs (312, 312') für die Drehung des Rotors (12) enthält, und
der Rotor (12) einen radialen Schlitz (114) des Durchgangstyps enthält, der dazu eingerichtet ist, ein Anschlagplättchen (21, 21A) aufzunehmen, wobei dieses Anschlagplättchen durch einen Generalschlüssel (M) betätigt werden kann, um sich innerhalb des Schlitzes (114) in einer Richtung senkrecht zur Längsachse des Rotors (12) zu verschieben,
wobei das Anschlagplättchen (21, 21A) weiterhin Arretierelemente (212, 212') enthält, die in die Verriegelungsreliefs (312, 312') des zweiten Abschnittes (30, 30', 30") in einer Schließstellung des Schlosses eingreifen.

2. Schloss (100) nach Anspruch 1, bei dem die Eingreifeinrichtungen eine Durchgangsöffnung (308, 308") enthalten.

3. Schloss (100) nach Anspruch 1, bei dem der erste Abschnitt (10) des Zylinders (101) eine im wesentlichen zylindrische Form hat und eine axiale Bohrung (11) aufweist, um den Rotor (12) drehbar aufzunehmen.

4. Schloss (100) nach Anspruch 3, bei dem der Rotor (12) in die Bohrung (11) durch eine kreisförmige Öffnung (11') des ersten Abschnittes (10) einsteckbar ist.

5. Schloss (100) nach Anspruch 4, bei dem der zweite Abschnitt (30, 30', 30") des Zylinders an einem Ende (31) des ersten Abschnittes (10) gegenüberliegend der kreisförmigen Öffnung (11') fixiert werden kann.

6. Schloss (100) nach Anspruch 1, bei dem der zweite Abschnitt (30, 30', 30") des Zylinders (101) ein radiales Loch (33) des Durchgangstyps aufweist, das sich in einer weiteren axialen Bohrung (34) erstreckt.

7. Schloss (100) nach Anspruch 6, bei dem der zweite Abschnitt (30, 30', 30") einen Bolzen (40) enthält, der federnd in einer Richtung im wesentlichen senkrecht zu einer Längsachse des zweiten Abschnittes verschoben werden kann, um einen Eingriff mit dem radialen Loch (33) herzustellen.

8. Schloss (100) nach Anspruch 7, bei dem dem Bolzen (40) eine Schraubenfeder (41) zugeordnet ist, die auf eine Bodenwand wirkt, die in der weiteren Bohrung (34) ausgebildet ist.

9. Schloss (100) nach Anspruch 7, bei dem der Bolzen (40) mit einer Kerbe (42) versehen ist, auf die ein Keilabschnitt (120) des Rotors (12) wirkt.

10. Schloss (100) nach Anspruch 1 und 6, bei dem der zweite Abschnitt (30, 30') des Zylinders (101) eine erste (301) und eine zweite (302) plane Seitenwand, die einander gegenüberliegen, sowie eine erste (303) und eine zweite (304) konvexe Wand enthält, die einander gegenüberliegen und mit den planen Wänden verbunden sind, wobei die planen Wände (301, 302) und die konvexen Wände (303, 304) mit der Bodenwand (306) derart verbunden sind, dass sie die weitere Bohrung (34) definieren, wobei das radiale Loch (33) in der ersten konvexen Wand ausgebildet ist.

11. Schloss (100) nach Anspruch 1, bei dem der Zylinder (101) weiterhin einen Durchgang (307) enthält, um Fixiereinrichtungen (32) des zweiten Abschnittes (30, 30', 30") an dem ersten Abschnitt (10) aufzunehmen, wobei der Durchgang in eine erste Durchgangslänge (307'), die in dem zweiten Abschnitt enthalten ist, und eine zweite Länge (307") teilbar ist, die in dem ersten Abschnitt enthalten ist.

12. Schloss (100) nach Anspruch 11, bei dem die Fixiereinrichtung des zweiten Abschnittes (30, 30', 30") an dem ersten Abschnitt (10) Schrauben, Nägel und Nieten umfasst.

13. Schloss (100) nach Anspruch 1, weiterhin enthaltend eine Vielzahl von Codeplättchen (15), die in entsprechenden radialen Schlitzen des Durchgangstyps (14) des Rotors (12) aufgenommen sind, wobei jedes Plättchen dazu eingerichtet ist, federnd nach außen von dem Rotor unter Einwirkung einer entsprechenden ersten Feder (16) hervorzuragen.

14. Schloss (100) nach Anspruch 13, bei dem die Plättchen (15) ein geformtes Durchgangsloch (151) enthalten, das dazu eingerichtet ist, mit dem Zahn eines herkömmlichen Schlüssels (N) des Schlosses zusammenzuwirken, um in den Rotor (12) zurückgezogen zu werden.

15. Schloss (100) nach Anspruch 13 oder 14, bei dem die Plättchen (15) Ausnehmungen (152) enthalten, um mit entsprechenden Längsstegen (13) in Eingriff zu gelangen, die in dem ersten Körper (10) ausgebildet sind.

16. Schloss (100) nach Anspruch 1, bei dem die Arretierelemente (212') eine weitere Ausnehmung enthalten, um einen Arretierzahn (312') aufzunehmen.

17. Schloss (100) nach einem der vorhergehenden Ansprüche, bei dem der erste (10) und der zweite (30, 30', 30") Abschnitt des Zylinders (10) unter Verwendung einer zinkbasierten Metalllegierung gefertigt sind, die Anteile von Aluminium, Kupfer und Magnesium enthält, wobei diese Anteile in folgenden Bereichen liegen: Aluminium 3,9% bis 4,3%, Kupfer 1% bis 1,25% und Magnesium 0,03% bis 0,04%.

18. Schloss (100) nach Anspruch 2, bei dem die Durchgangsöffnung (308, 308") derart beschaffen ist, dass sie eine veränderbare Form, Abmessungen und Ausrichtung hat, wodurch die Kopplung des Schlosses mit Schäften (401) von Ventilen ermöglicht ist, die eine Vielzahl unterschiedlicher Formen und Abmessungen haben.

19. Schloss (100) nach Anspruch 1, bei dem der zweite Abschnitt (30") ein Ausrichtungselement (601) enthält, um eine Anordnungsausrichtung des Schlosses mit dem Ventil (400) festzulegen.

## Revendications

1. Verrou (100) destiné à commander une vanne (400) comprenant une tige (401) s'étendant vers l'extérieur d'un corps de vanne (403) de la vanne (400), ladite tige (401) étant apte à tourner afin de commander l'ouverture et la fermeture de la vanne (400),
ledit verrou (100) comprenant un tambour (101) conçu pour être solidarisé en rotation à la tige (401) et comprenant un rotor (12) afin d'actionner ledit verrou entre une position de fermeture et une position d'ouverture,
ledit tambour (101) comprenant une première partie (10) et une seconde partie (30, 30', 30"), pouvant être fixées de manière réversible l'une à l'autre, ladite première partie (10) du tambour étant apte à loger le rotor (12) qui comporte des pattes de chiffrement (15), chaque patte de chiffrement (15) étant conçue pour entrer en interaction avec une clé commune (N) du verrou (100) afin de permettre au rotor (12) de tourner dans la première partie (10), et ladite seconde partie (30, 30', 30") étant conçue pour être fixée en rotation à la tige (401) de la vanne (400) via des moyens d'engagement (308, 308") qui sont inclus dans une paroi inférieure (306, 306") de ladite seconde partie,
ladite seconde partie (30, 30', 30") du tambour (101) comprenant une première extrémité (310, 310') opposée à la paroi inférieure (306, 306") comprenant des cliquets de verrouillage (312, 312') pour la rotation du rotor (12),
ledit rotor (12) comprenant une fente radiale (114) du type traversant, conçue pour loger une patte de butée (21, 21A), ladite patte de butée pouvant être actionnée par un passe-partout (M) afin d'avoir un mouvement de translation à l'intérieur de ladite fente (114) dans une direction orthogonale à l'axe longitudinal du rotor (12),
où la patte de butée (21, 21A) comprend, en outre, des éléments de retenue (212, 212') afin d'engager lesdits cliquets de verrouillage (312, 312') de la seconde partie (30, 30', 30") dans une position de verrouillage du verrou.

2. Verrou (100) selon la revendication 1, dans lequel ledit moyen d'engagement comprend une ouverture traversante (308, 308").

3. Verrou (100) selon la revendication 1, dans lequel ladite première partie (10) du tambour (101) a une forme sensiblement cylindrique et comprend un alésage axial (11) afin de loger en rotation le rotor (12).

4. Verrou (100) selon la revendication 3, dans lequel ledit rotor (12) peut être inséré dans l'alésage (11) via une ouverture circulaire (11') de la première partie (10).

5. Verrou (100) selon la revendication 4, dans lequel ladite seconde partie (30, 30', 30") du tambour (101) peut être fixée à une extrémité (31) de la première partie (10) opposée à ladite ouverture circulaire (11').

6. Verrou (100) selon la revendication 1, dans lequel ladite seconde partie (30, 30', 30") du tambour (101) comprend un trou radial (33) du type traversant débouchant dans un alésage axial supplémentaire (34) respectif.

7. Verrou (100) selon la revendication 6, dans lequel ladite seconde partie (30, 30', 30") comprend un pêne (40) qui peut avoir un mouvement de translation élastique dans une direction sensiblement orthogonale à un axe longitudinal de la seconde partie afin d'engager ledit trou radial (33).

8. Verrou (100) selon la revendication 7, dans lequel ledit pêne (40) est associé à un ressort hélicoïdal (41) qui réagit sur une paroi de fond réalisée dans ledit alésage supplémentaire (34).

9. Verrou (100) selon la revendication 7, dans lequel ledit pêne (40) est pourvu d'une encoche (42) sur laquelle agit une partie clé (120) du rotor (12).

10. Verrou (100) selon les revendications 1 et 6, dans lequel ladite seconde partie (30, 30') du tambour (101) comprend des première (301) et seconde (302) parois latérales planes mutuellement opposées et des première (303) et seconde (304) parois convexes mutuellement opposées et réunies aux parois planes, lesdites parois planes (301, 302) et lesdites parois convexes (303, 304) étant réunies à la paroi inférieure (306) de manière à définir ledit alésage (34) supplémentaire, ledit trou radial (33) étant ménagé dans ladite première paroi convexe.

11. Verrou (100) selon la revendication 1, dans lequel le tambour (101) comprend, en outre, un conduit (307) destiné à loger un moyen de fixation (32) de ladite seconde partie (30, 30', 30") à la première partie (10), ledit conduit pouvant être divisé en une première longueur de conduit (307') comprise dans la seconde partie et en une seconde longueur de conduit (307") comprise dans la première partie.

12. Verrou (100) selon la revendication 11, dans lequel ledit moyen de fixation de ladite seconde partie (30, 30', 30") à la première partie (10) comprend des vis, des clous et des rivets.

13. Verrou (100) selon la revendication 1, comprenant, en outre, une multiplicité de pattes de chiffrement (15) logées dans des fentes radiales (14) respectives de type traversant dudit rotor (12), chaque patte étant conçue pour faire saillie élastiquement vers l'extérieur du rotor sous l'effet d'un premier ressort (16) respectif.

14. Verrou (100) selon la revendication 13, dans lequel lesdites pattes (15) comprennent un trou traversant conformé (151) conçu pour entrer en interaction avec les dents d'une clé commune de serrure (N) afin d'être rétractées à l'intérieur du rotor (12).

15. Verrou (100) selon la revendication 13 ou 14, dans lequel lesdites pattes (15) comprennent des évidements (152) destinés à engager des nervures longitudinales (13) respectives formées au sein du premier corps (10).

16. Verrou (100) selon la revendication 1, dans lequel lesdits éléments de retenue (212') comprennent un évidement supplémentaire destiné à loger une dent de retenue (312').

17. Verrou (100) selon l'une quelconque des revendications précédentes, dans lequel les première (10) et seconde (30, 30', 30") parties du tambour (101) sont fabriquées en utilisant un alliage de métal à base de zinc comprenant des pourcentages d'aluminium, de cuivre, et de magnésium, lesdits pourcentages étant dans les plages suivantes : 3, 9 % à 4,3 % d' aluminium, 1 % à 1,25 % de cuivre, 0,03 % à 0,04 % de magnésium.

18. Verrou (100) selon la revendication 2, dans lequel ladite ouverture traversante (308, 308") est conçue pour avoir une forme, des dimensions, et une orientation variables, de façon à permettre l'accouplement du verrou aux tiges (401) de vannes ayant une pluralité de formes et dimensions différentes.

19. Verrou (100) selon la revendication 1, dans lequel ladite seconde partie (30") comprend un élément d'orientation (601) afin de définir une orientation d'assemblage du verrou par rapport à la vanne (400).
